(19) Europäisches Patentamt / European Patent Office / Office européen des brevets

(11) **EP 2 888 459 B1**

(12) **FASCICULE DE BREVET EUROPEEN**

(45) Date de publication et mention de la délivrance du brevet:
**16.11.2016 Bulletin 2016/46**

(21) Numéro de dépôt: **13744718.1**

(22) Date de dépôt: **09.07.2013**

(51) Int Cl.:
*F01N 9/00* $^{(2006.01)}$       *F01N 11/00* $^{(2006.01)}$

(86) Numéro de dépôt international:
**PCT/FR2013/051628**

(87) Numéro de publication internationale:
**WO 2014/020251 (06.02.2014 Gazette 2014/06)**

(54) **PROCEDE DE COMMANDE D'UN FILTRE A PARTICULES D'UN VEHICULE AUTOMOBILE EN FONCTION DE SON ENDOMMAGEMENT**

VERFAHREN ZUR STEUERUNG EINES PARTIKELFILTERS EINES KRAFTFAHRZEUGS IN ABHÄNGIGKEIT SEINER BESCHÄDIGUNG

PROCESS OF OPERATING A PARTICULATE FILTER OF A MOTOR VEHICLE DEPENDING ON IT'S DETERIORATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2012 FR 1257460**

(43) Date de publication de la demande:
**01.07.2015 Bulletin 2015/27**

(73) Titulaire: **Peugeot Citroën Automobiles SA**
**78140 Vélizy Villacoublay (FR)**

(72) Inventeurs:
• **FAURE, Sebastien**
  **F-92500 Rueil Malmaison (FR)**
• **CORNETTE, Annabelle**
  **F-78420 Carrieres Sur Seine (FR)**
• **REUILLY, Guillaume**
  **F-92700 Colombes (FR)**

(74) Mandataire: **Renous Chan, Véronique**
**Peugeot Citroen Automobiles SA**
**Propriété Industrielle - LG081**
**18 rue des Fauvelles**
**92250 La Garenne Colombes (FR)**

(56) Documents cités:
**EP-A2- 1 103 702    US-A1- 2002 196 153**

**Description**

L'invention porte sur un procédé de commande d'un filtre à particules d'un véhicule automobile en fonction de son endommagement ainsi que sur le système adapté à la mise en oeuvre dudit procédé.

L'invention est applicable à tous les véhicules munis d'un système de post-traitement des particules polluantes contenues dans les gaz d'échappement équipé d'un filtre à particules.

Les gaz d'échappement des moteurs thermiques comportent habituellement des éléments polluants et notamment des particules qui sont rejetées dans l'atmosphère. Afin de supprimer ces rejets, des filtres sont placés dans la ligne d'échappement des gaz pour bloquer les particules. Ces filtres à particules (FAP) sont généralement des cylindres en céramique composés d'une multitude de canaux de faibles diamètres (entre quelques centaines de microns et quelques millimètres) enfermés dans un boîtier métallique présentant un cône d'entrée et un cône de sortie permettant son raccordement à une ligne d'échappement. Les particules sont piégées dans ces canaux sous forme de suies ce qui a pour effet d'encrasser progressivement le filtre. Il est donc nécessaire de régénérer le filtre périodiquement.

A cet effet, le filtre est chauffé afin de brûler les particules piégées. Classiquement le surplus d'énergie à l'échappement nécessaire, pendant les phases de régénération, à l'élévation de température par rapport au fonctionnement normal du moteur est fourni par l'utilisation de post-injections, c'est-à-dire d'injections de carburant tardives, après le point mort haut du cycle, ou par une dégradation du rendement de la combustion, ou encore par une injection de carburant directement dans la ligne d'échappement produisant un exotherme dans le catalyseur d'oxydation

Le filtre à particules est ainsi un organe présentant une fonction de filtration et de stockage des suies, ainsi qu'une fonction de combustion de celles-ci lors des phases de régénérations demandées par le calculateur moteur ou passives car les particules charbonnées piégées sont des matières dont la combustion peut s'entretenir d'elle-même (combustion par $NO_2$ notamment communément appelé effet CRT pour l'acronyme du terme anglais « Continuously Regenerating Trap » pour piège à régénération continue).

Lors des phases de régénérations, le filtre à particules peut se fissurer et donc dégrader sa fonction de filtration des particules. Actuellement, lors du développement des filtres à particules effectué par exemple sur banc d'essai moteur, on identifie une valeur de masse en suies limite (dite MSL) optimale qui permet de garantir une bonne efficacité de filtration pour plusieurs centaines de régénérations.

On cherche alors à atteindre cette masse optimale le plus souvent possible lors des régénérations. Toutefois, il n'est pas possible de régénérer tout le temps le filtre au moment souhaité compte tenu de l'utilisation du véhicule par le conducteur en termes de vitesse et d'arrêts moteurs, de contraintes de surconsommation, et/ou de dilution d'huile dans le moteur.

Il arrive donc d'altérer la robustesse du filtre par des régénérations en surcharge par rapport à la masse en suies limite (MSL) et de fissurer plus rapidement le filtre. On connait par ailleurs des documents EP1103702A2 et US20020196153A1 des procédés de commande d'un filtre à particules contenues dans les gaz d'échappement d'un véhicule automobile en fonction d'un endommagement.

L'invention vise à remédier à cet inconvénient en proposant un procédé de commande d'un filtre à particules contenues dans les gaz d'échappement d'un véhicule automobile en fonction d'un endommagement, caractérisé en ce que lors d'une régénération dudit filtre à particules, il comporte les étapes suivantes:

- classer une grandeur caractéristique de l'endommagement du filtre, telle que le chargement correspondant à une masse volumique des suies par volume de filtre (en g/l) ou la masse (en g) en suies du filtre, dans une classe d'endommagement,
- déterminer, au moyen d'une matrice d'endommagement, une valeur d'endommagement unitaire à partir de la classe d'endommagement et d'un nombre de répétitions des régénérations associé à ladite classe d'endommagement,
- sommer cette valeur d'endommagement unitaire à une valeur courante d'endommagement pour obtenir une nouvelle valeur courante d'endommagement, et
- abaisser une valeur de masse en suies limite pour laquelle sera commandée la régénération du filtre à particules en fonction de la nouvelle valeur courante d'endommagement.

Selon une mise en oeuvre, le procédé comporte en outre l'étape de limiter la nouvelle valeur de l'endommagement au moyen d'une fonction calibrable.

Selon une mise en oeuvre, le procédé comporte l'étape de limiter la valeur d'endommagement unitaire.

Selon une mise en oeuvre, le procédé comporte l'étape de détecter une régénération du filtre à particules par comparaison d'une valeur de température en amont du filtre mesurée ou estimée avec une valeur de température seuil.

Selon une mise en oeuvre, le procédé comporte l'étape de prolonger une détection de combustion de suies après un arrêt d'une demande de régénération du filtre à particules.

Selon une mise en oeuvre, la grandeur caractéristique de l'endommagement du filtre est calculée à partir du chargement en suies et d'une température mesurée ou estimée à l'intérieur du filtre à particules.

Selon une mise en oeuvre, le procédé comporte l'étape de réguler la nouvelle valeur courante d'endommagement par rapport à un endommagement cible.

Selon une mise en oeuvre, l'endommagement cible est variable en fonction d'un kilométrage du véhicule.

Selon une mise en oeuvre, le procédé comporte en outre l'étape de tenir compte d'un encrassement du filtre à particules pour déterminer la nouvelle valeur courante d'endommagement.

Selon une mise en oeuvre, le procédé comporte en outre l'étape de fournir une indication au conducteur relative au taux de filtration du filtre à particules à partir de la nouvelle valeur courante d'endommagement du filtre à particules.

L'invention a également pour objet un système de commande d'un filtre à particules comportant une mémoire contenant des instructions pour la mise en oeuvre du procédé selon l'invention.

L'invention sera mieux comprise à la lecture de la description qui suit et à l'examen des figures qui l'accompagnent. Ces figures ne sont données qu'à titre illustratif mais nullement limitatif de l'invention.

La figure 1 montre une représentation fonctionnelle du système de commande d'un filtre à particules selon l'invention;

La figure 2 montre une représentation fonctionnelle détaillée du module du système de la figure 1 permettant de déterminer la classe de la régénération ainsi qu'un histogramme d'endommagement;

La figure 3 montre une représentation fonctionnelle détaillée du module du système de la figure 1 permettant de calculer l'endommagement du filtre à particules ainsi qu'un coefficient de protection correspondant;

La figure 4 représente un exemple d'une cartographie permettant de déterminer un endommagement unitaire du filtre à particules;

La figure 5 montre une représentation graphique de l'évolution d'une limitation de l'endommagement en fonction de la classe d'endommagement;

La figure 6 montre une représentation fonctionnelle du module générant une demande de régénération à partir du coefficient de protection du filtre à particules;

La figure 7 montre une représentation fonctionnelle d'une variante de réalisation du système de la figure 1 permettant la détection d'une phase de régénération sollicitée ou passive;

La figure 8 montre une représentation détaillée des blocs fonctionnels utilisés dans la variante de la figure 7;

La figure 9 montre une représentation fonctionnelle d'une variante de réalisation du système de la figure 1 pour le calcul de la grandeur caractéristique d'endommagement;

La figure 10 montre une représentation détaillée des blocs fonctionnels utilisés dans la variante de réalisation de la figure 9;

La figure 11 montre une représentation fonctionnelle d'une variante de réalisation du système de la figure 1 assurant une régulation de l'endommagement du filtre à particules;

La figure 12 montre une représentation détaillée des blocs fonctionnels utilisés dans la variante de la figure 11 pour le calcul de l'endommagement unitaire;

La figure 13 montre une représentation graphique de l'évolution d'un endommagement cible en fonction d'un nombre de kilomètres parcourus;

La figure 14 montre, une représentation fonctionnelle d'un exemple de module régulateur utilisé dans la variante de réalisation de la figure 11;

La figure 15 montre une représentation fonctionnelle d'une variante de réalisation tenant compte d'un encrassement du filtre pour déterminer l'endommagement du filtre.

Les éléments identiques, similaires ou analogues conservent la même référence d'une figure à l'autre.

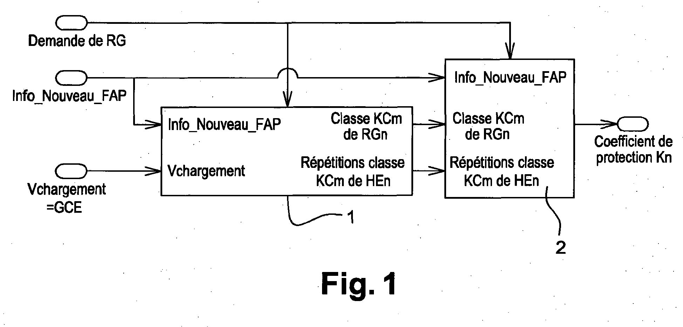

La figure 1 montre des modules 1 et 2 permettant la mise en oeuvre du procédé de commande d'un filtre à particules en fonction d'un endommagement dudit filtre. Ces modules 1, 2 sont destinés à être implantés dans un système de contrôle électrique du véhicule, à savoir soit dans le calculateur moteur, soit dans un système additionnel en communication avec le calculateur moteur ayant une mémoire contenant des instructions correspondantes pour le contrôle du filtre à particules.

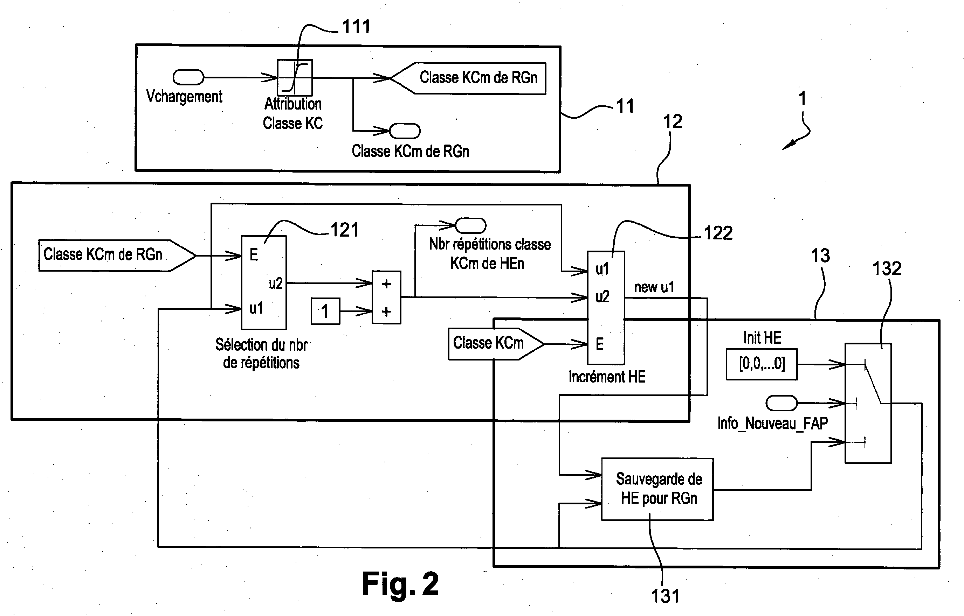

Le module 1 présente trois fonctionnalité activées au moment du début d'une régénération réalisées par les modules 11 à 13 montrés sur la figure 2. Plus précisément, le module 11 assure le classement d'une grandeur caractéristique de l'endommagement (GCE), en l'occurrence le chargement "Vchargement" en suies du filtre au début de la régénération, dans une classe KCm. A cet effet, le module 11 fait appel à une fonction 111 de discrétisation attribuant, à chaque plage de valeurs distincte de volume de chargement en suies, un numéro de classe KC parmi m classes. Cette fonction peut par exemple prendre la forme suivante:

$$\forall i \in \{1,2,\ldots m\},\ C_i < C < C_{i+1} \rightarrow KC_i = i$$

Dans un exemple, on définit les classes suivantes:

$$0 < C < 10\ g/l \rightarrow classe\ 1$$
$$10 < C < 12\ g/l \rightarrow classe\ 2$$
$$12 < C < 13\ g/l \rightarrow classe\ 3$$
$$\ldots\ldots..$$
$$20 < C < 30\ g/l \rightarrow classe\ 6$$

Le module 12 assure également, via les modules 121 et 122, la mise à jour d'un histogramme d'endommagement HE contenant l'ensemble des endommagements unitaires vus par le filtre à particules. Cet histogramme HE se présente sous la forme d'un vecteur contenant le nombre de régénérations par classe. A l'issue de la n ième régénération $RG_n$, l'histogramme HE est mis à jour en incrémentant de 1 la valeur correspondant à la classe $KC_i$ soit $HE_n(i) = HE_{n-1}(i) + 1$

Le module 13 assure le stockage de l'histogramme HE qui évolue au cours de la vie du véhicule par exemple dans une mémoire 131 de type EEPROM ainsi que la réinitialisation de cette mémoire 131, via le bloc fonctionnel 132, en cas de changement du filtre à particules. Ce changement sera signifié par l'entrée "Info_Nouveau_FAP".

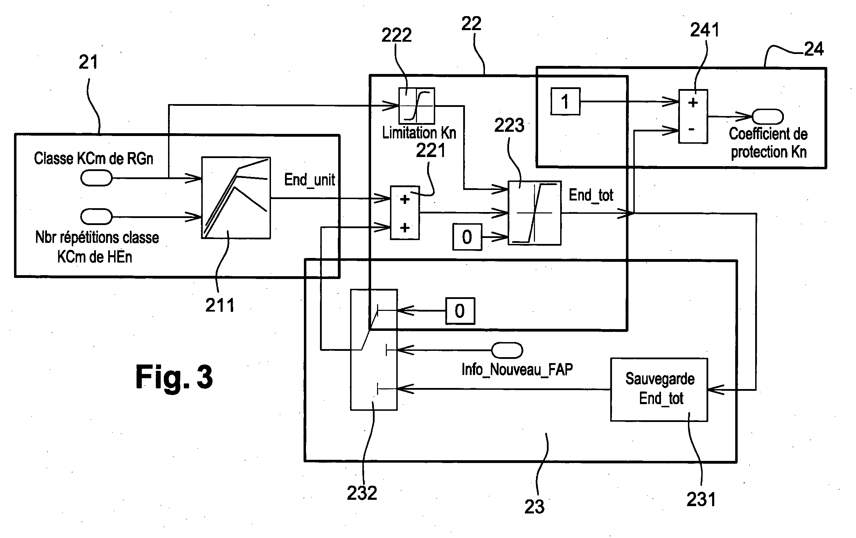

Le module 2 également activé au moment du début d'une régénération réalise quatre fonctionnalités via les modules 21-24 montrés sur la figure 3. Plus précisément, le module 21 détermine un endommagement unitaire End_unit via une matrice 211 d'endommagement à partir du numéro de la classe KCi et du nombre de régénérations correspondant à la classe KCi issus du module 1 qui lui sont appliqués en entée suivant la relation générale End_unit (n)= f($KC_{m,n}$; $HE_n(m)$).

La matrice 211 d'endommagement est en l'occurrence basée sur un modèle empirique. En variante, le modèle de la matrice pourrait être un modèle détaillé de type physico-chimique.

Le module 22 somme, via le bloc 221, l'endommagement unitaire End_unit à une valeur courante d'endommagement End_tot du filtre à particules correspondant à son historique d'endommagement.

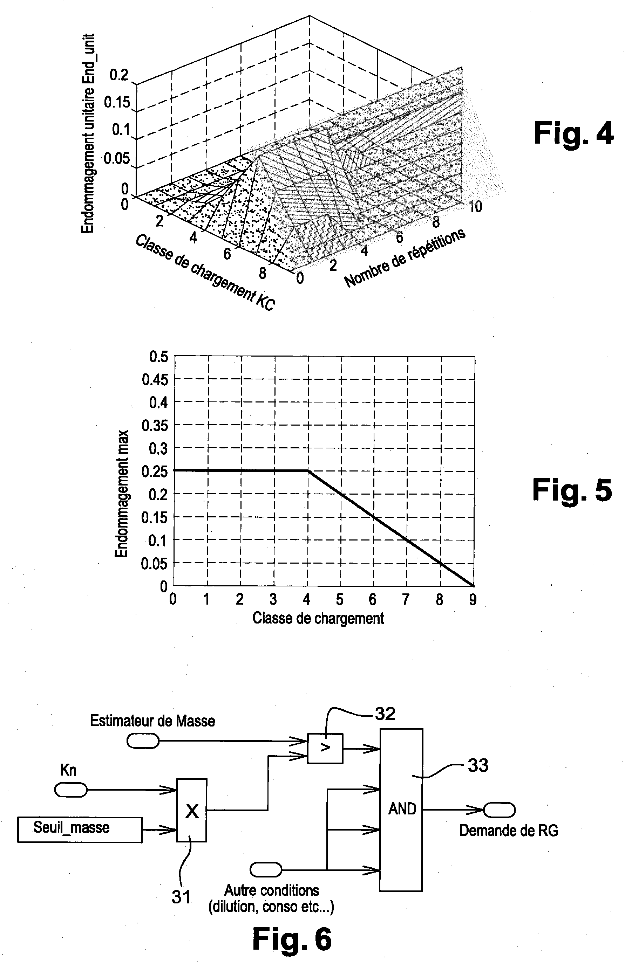

Comme visible sur la figure 4, le modèle d'endommagement n'étant pas une application linéaire, le module 22 applique une limitation calibrable via le bloc 222 pour tenir en compte de cette non-linéarité. Une représentation graphique de cette limitation de l'endommagement qui dépend de la classe de chargement de la régénération est montrée sur la figure 5.

A cet effet, le bloc 222 sélectionne, comme nouvelle valeur courante d'endommagement End_tot, le maximal entre la valeur de limitation calibrable issue de la courbe de la figure 5 et la valeur de la somme entre l'endommagement courant End_tot(n-1) et l'endommagement unitaire calculé End_unit(n) suivant la relation suivante appliquée par le bloc 223: End_tot(n) = min (max($KC_{m,n}$); End_tot(n-1)+ End_unit(n))

L'endommagement total End_tot ainsi obtenu est un nombre entre 0 et X (avec X inférieur à 1), où:

- 0 représente un filtre à particules totalement intègre, c'est à filtre neuf ou n'ayant subi que des régénérations en faible charge qui n'ont pas abouti à la création de fissures, et
- X représente un filtre à particules ayant atteint un certain niveau de dégradation de filtration en masse et nombre de particules.

Le module 23 assure la sauvegarde de l'endommagement total End_tot ainsi calculé évoluant sur la vie du véhicule dans une mémoire 231 par exemple de type EEPROM ainsi que la réinitialisation de cette mémoire 231, via le bloc fonctionnel 232, en cas de changement du filtre à particules.

Le coefficient $K_n$ de protection du filtre à particules après la n ième régénération est déterminé par le module 24 en utilisant la fonction suivante mise en oeuvre par le bloc fonctionnel 241: $K_n$=1-End_tot(n).

$K_n$ va ainsi varier entre 1-X et 1 afin d'abaisser les seuils de masse de déclenchement des régénérations et ainsi éviter d'atteindre la valeur d'endommagement X trop rapidement. A cet effet, comme montré sur la figure 6, le bloc 31 multiplie le seuil de masse limite "Seuil_masse" par le coefficient $K_n$. Le résultat de cette multiplication est comparé au moyen du bloc 32 avec une masse estimée afin de déclencher la régénération. D'autres conditions telles que la dilution de l'huile ou la consommation du véhicule pourront être également prises en compte par le module 33 pour adapter le moment du déclenchement de la régénération.

Ainsi, plus le filtre à particules est endommagé, plus le procédé commande une réduction des seuils de déclenchement des régénérations afin de le protéger. Cette stratégie est basée sur un système fonctionnant en boucle ouverte, un endommagement croissant, et donc un facteur $K_n$ de protection de plus en plus sévère.

La saturation permet de ne pas trop diminuer les seuils de masse afin d'éviter des régénérations trop fréquentes. Cette saturation permet même dans une certaine mesure de réduire l'endommagement du filtre à particules en cas de régénérations avec des grandeurs caractéristique d'endommagement très importantes au-delà desquelles la protection filtre à particules ne serait plus d'aucune utilité.

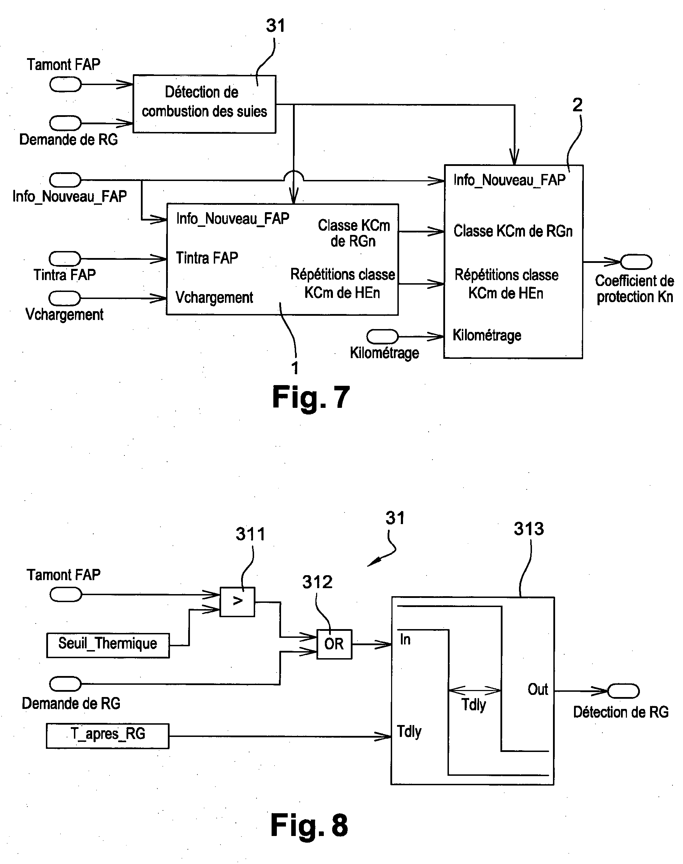

Dans une première variante de mise en oeuvre montrée sur la figure 7, un module 31 assure une détection d'une phase de régénération sollicitée via la commande "demande de RG" mais aussi une détection des combustions de suies non sollicitées, dites passives, dues à la nature combustible des particules filtrées. A cet effet, le module 31 dont le détail est montré sur la figure 8, comporte un bloc fonctionnel 311 comparant la température mesurée ou estimée en amont du filtre "TamontFAP" par rapport à un seuil de température "Seuil_Thermique" et signale un dépassement entre ces deux valeurs correspondant à une phase de régénération. Une demande de régénération par le système de commande du filtre "Demande de RG" est également prise en compte par le bloc fonctionnel 312.

En outre, un bloc fonctionnel 313 permet de prolonger la détection de régénération d'une durée "T_apres_RG" de manière à prendre en compte une réaction exotherme se produisant après une demande d'arrêt de la régénération. Il est ainsi possible de calculer la grandeur caractéristique de l'endommagement pendant la phase de régénération effective et de déclencher le calcul et les mises à jour de l'histogramme HE et des endommagements en fin de phase de régénération effective.

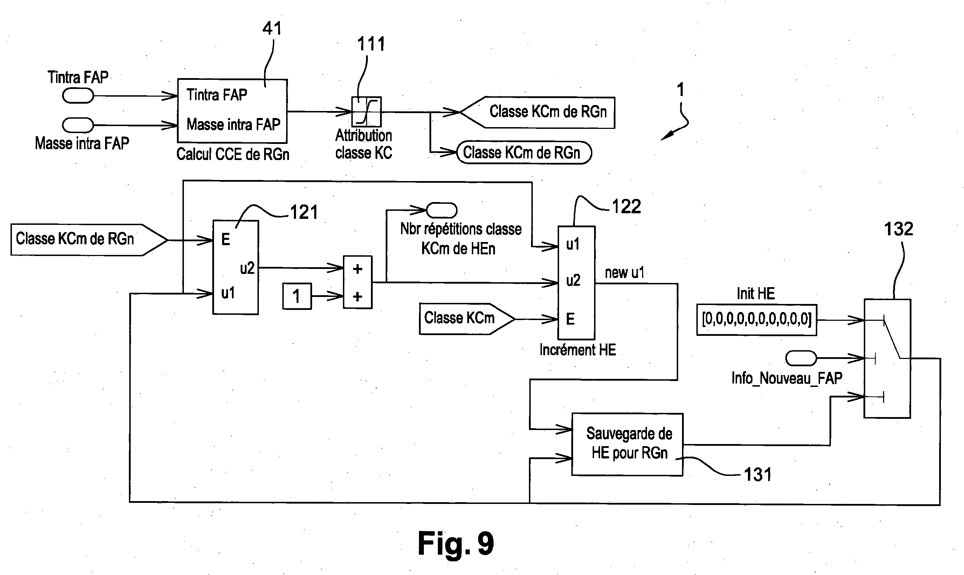

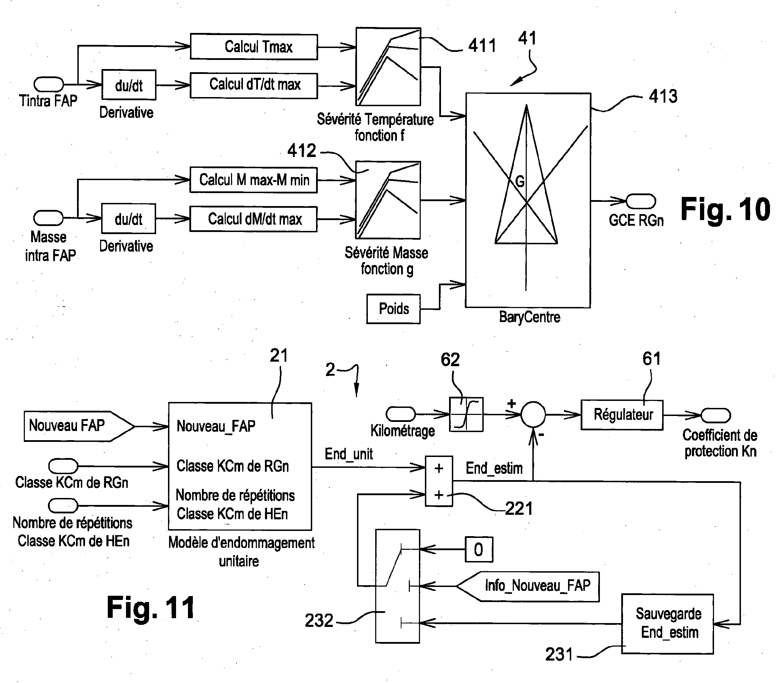

Il est également possible d'améliorer le calcul de la grandeur caractéristique de l'endommagement GCE au moyen du module 41 visible sur la figure 9 et en détails sur la figure 10. En l'occurrence, la grandeur caractéristique GCE est calculée à partir de la masse "Masse intra FAP" estimée au début d'une phase de régénération et de la température à l'intérieur du filtre à particules "T intra FAP" estimée ou mesurée.

La grandeur caractéristique de l'endommagement peut ainsi être calculée par exemple par la formule suivante:

$$- GCE_n=Poids*f(Tmax,dT/dt)+(1-Poids)*g(\Delta M,dM/dt)$$

- T correspondant à "T intra FAP" et M correspondant à "Masse intra FAP",
- les fonctions f et g appliquées respectivement par les blocs 411 et 412 caractérisent la sévérité en température et en masse de la régénération. Ces fonctions f et g correspondent à des cartographies de normalisation allant par exemple de 0 à 100 afin de qualifier les valeurs d'entrée.

Les résultats des fonctions f et g sont pondérés via la variable "Poids" de manière à accorder plus ou moins d'importance à chacun de ces résultats suivant un calcul de barycentre effectué par le bloc 413 dont le résultat constituera la grandeur caractéristique d'endommagement GCE qui sera discrétisée par la suite par le bloc 111.

Dans une variante de mise en oeuvre montrée sur les figurés 11 et 12, une limitation est introduite directement dans la valeur d'endommagement unitaire End_unit de chaque régénération calculée par le module 21 au lieu de saturer la somme correspondant à l'endommagement total comme précédemment.

A cet effet, des blocs fonctionnels 511-513 modifient le caractère additif permettant de déterminer l'endommagement en rajoutant 0 pour toutes les régénérations correspondant à une classe KC de grandeur caractéristique d'endommagement inférieure à la classe maximale de son historique.

Au lieu d'être un générateur de commande en boucle ouverte, la sommation des endommagements unitaires devient ainsi un estimateur de l'endommagement End_estim du filtre à particules avec des valeurs pouvant être supérieures à 1 suivant la relation: End_estim(n)=End_estim(n-1)+End_unit(n)

Par exemple, on choisit la valeur 0 pour un filtre à particule intègre, 1 pour un filtre à particules ayant atteint un niveau d'ISC (In Service Conformity), 2 pour un filtre ayant un niveau correspondant à un niveau OBD (dont l'efficacité de filtration résiduelle fait dépasser la norme OBD (qui est l'acronyme du terme anglais « On Bord Diagnostic » pour diagnostic embarqué), 25 mg/km sur cycle NEDC (qui est l'acronyme du terme anglais « New European Driving Cycle » correspondant au nouveau cycle d'homologation européenne, pour la norme Euro 6.1 et de moins en moins pour les futures normes) et 3 pour un filtre à particules très endommagé. Bien entendu, ces exemples de valeurs ne sont pas limitatifs tout comme la discrétisation des états significatifs correspondants.

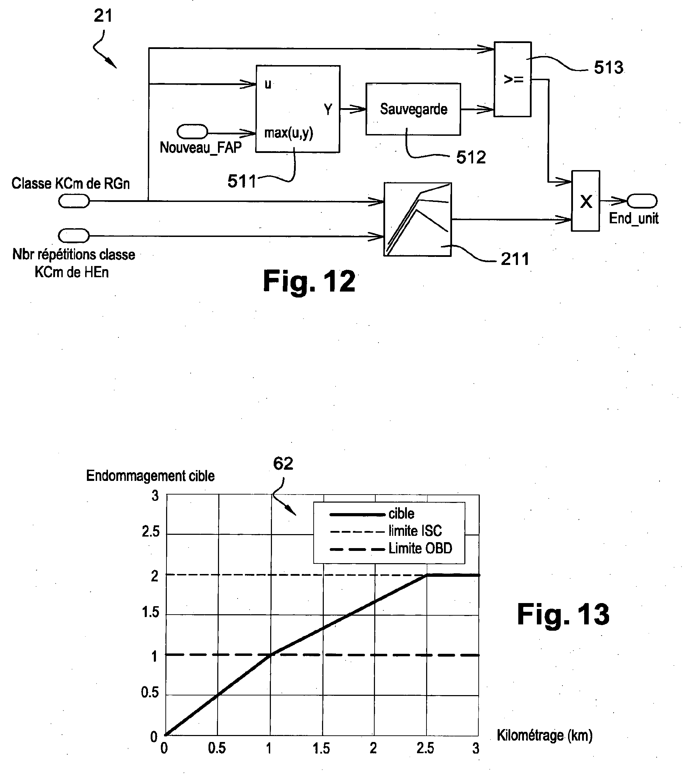

Par ailleurs, comme montré sur les figures 11, 12 et 14, l'endommagement End_estim est régulé, via le bloc régulateur 61, autour d'une valeur de consigne fournie par le bloc 62 de manière à faire fonctionner le procédé en boucle fermée via le retour d'état d'un modèle. Comme visible sur la figure 13, la valeur de consigne issue du bloc 62 dépend de préférence du nombre de kilomètres parcourus par le véhicule. Le bloc régulateur 61, par exemple de type PI (Proportionelle et Intégrale), permet d'éviter les altérations de la robustesse du filtre au moins pendant une certaine durée minimum pour satisfaire les contraintes réglementaires telles que le niveau ISC (In Service Conformity).

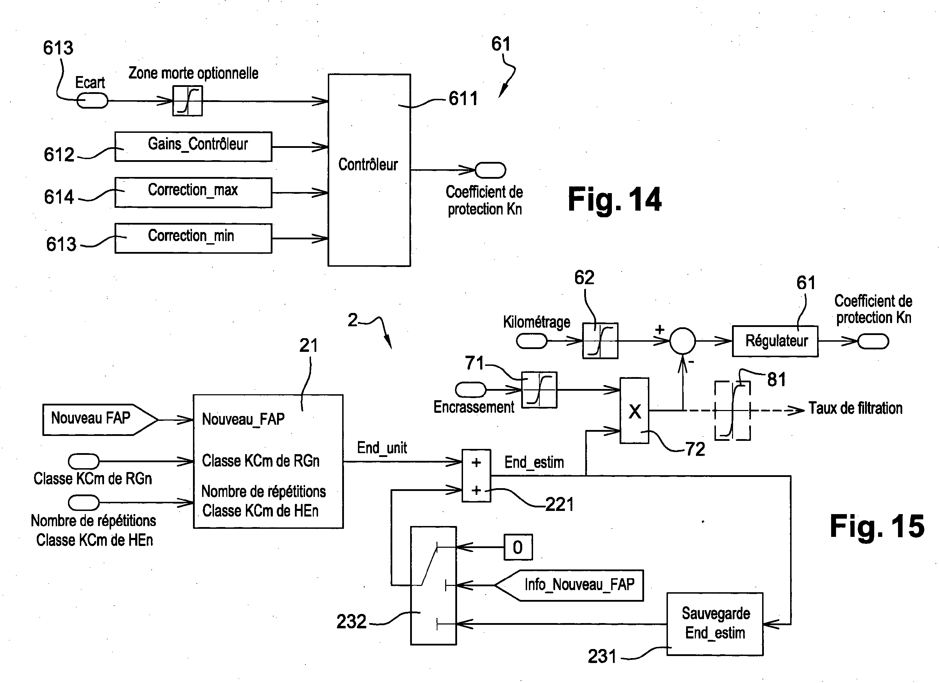

Ce bloc régulateur 61 est activé de manière relativement lente au rythme des détections des phases de régénérations. Comme montré sur la figure 14, ce bloc calculateur 61 comporte un contrôleur 611 qui applique des gains "Gains_controleur" à des valeurs relatives à l'écart 613 entre la valeur cible et la valeur mesurée appliqué en entrée. La sortie du bloc régulateur 61 peut être limitée par des valeurs minimale 613 ("correction_min") et maximale 614 ("correction maximale) afin de modifier les seuils de masses pris en compte par le système de commande du filtre à particules.

Il est d'ailleurs possible, dans cette mise en oeuvre, d'autoriser un minimum négatif afin de forcer temporairement une augmentation des seuils de chargement en suies dans le cas où le filtre à particules est estimé très peu endommagé par rapport au kilométrage courant.

Dans la mise en oeuvre de la figure 15, le module 2 tient compte de l'encrassement du filtre à particules via le bloc fonctionnel 71. En effet, un filtre à particules s'encrasse tout au long de sa vie à cause des résidus de combustion d'huile et/ou d'additif. Cet encrassement a un effet bénéfique pour la filtration dans la mesure où il colmate au moins partiellement les fissures créées par les régénérations.

Le bloc 71 utilise ainsi une information relative à l'encrassement pour corriger l'endommagement estimé End_estim, par exemple par des valeurs positives inférieures ou égales à 1 dans le cas d'une correction multiplicative effectuée par le bloc 72. Cela permet de tempérer l'augmentation de l'endommagement estimée conformément au regain d'efficacité dû à l'encrassement du filtre.

L'endommagement estimé End_estim utilisé dans la boucle de régulation vaudra donc End_estim(n) x Regain_filtration_encrassement, le coefficient "Regain_filtration_encrassement" étant appliqué par le bloc 71.

Dans une autre variante de réalisation, le module 2 est apte à établir un diagnostic de filtration. A cet effet, un bloc fonctionnel 81 calcule un taux de filtration à partir de la valeur de l'endommagement estimé End_estim. Cette valeur du taux de filtration pourra être fournie au conducteur via une interface dédiée du tableau de bord l'avertissant sur son état de pollution. Ainsi, par exemple, on pourra afficher un signal dont la couleur varie en fonction de l'état d'endommagement du filtre ou un pourcentage correspondant au taux de filtration du filtre à particules.

Par ailleurs, il est possible de donner accès aux informations stockées en mémoire, telles que l'histogramme d'endommagement HE, l'endommagement estimé End_estim, ou le coefficient de protection Kn, en particulier pour les véhicules dont on vérifie la satisfaction aux contraintes réglementaires ISC ou OBD. Cela va permettre d'enrichir les bases de données du constructeur afin notamment de pouvoir apprécier les marges réelles prises lors de la conception des filtres à particules.

Il sera également possible d'estimer l'endommagement d'une autre fonction de post-traitement telle que la réduction des oxydes d'azotes dans le cas d'un système combinant l'utilisation d'un filtre à particules et d'un système de de type SCR ("Selective Catalytic Réduction"), ou les fonctions d'oxydation des oxydes de carbone dans le cas d'un filtre à particules catalysé, ou l'ensemble des fonctions d'un catalyseur à quatre voies.

**Revendications**

1. Procédé de commande d'un filtre à particules contenues dans les gaz d'échappement d'un véhicule automobile en fonction d'un endommagement, **caractérisé en ce que** lors d'une régénération dudit filtre à particules, il comporte les étapes suivantes:

- classer (11) une grandeur caractéristique de l'endommagement du filtre, telle qu'un chargement ou une masse en suies du filtre, dans une classe d'endommagement (KCm),
- déterminer, au moyen d'une matrice (211) d'endommagement, une valeur d'endommagement unitaire (End_unit) à partir de la classe d'endommagement (KCm) et d'un nombre de répétitions des régénérations associé à ladite classe d'endommagement (KCm),
- sommer cette valeur d'endommagement unitaire (End_unit) à une valeur courante d'endommagement (End_tot) pour obtenir une nouvelle valeur courante d'endommagement (End_tot), et

- abaisser une valeur de masse en suies limite pour laquelle sera commandée la régénération du filtre à particules en fonction de la nouvelle valeur courante d'endommagement (End_tot).

2. Procédé selon la revendication 1, **caractérisé en ce qu'**il comporte en outre l'étape de limiter (222) la nouvelle valeur de l'endommagement (End_tot) au moyen d'une fonction calibrable.

3. Procédé selon la revendication 1 ou 2, **caractérisé en ce qu'**il comporte l'étape de limiter (511-513) la valeur d'endommagement unitaire.

4. Procédé selon l'une des revendications 1 à 3, **caractérisé en ce qu'**il comporte l'étape de détecter (311, 312) une régénération du filtre à particules par comparaison d'une valeur de température en amont du filtre mesurée ou estimée (TamontFAP) avec une valeur de température seuil (Seuil_Thermique).

5. Procédé selon l'une des revendications 1 à 4, **caractérisé en ce qu'**il comporte l'étape de prolonger (313) une détection de combustion de suies après un arrêt d'une demande de régénération du filtre à particules.

6. Procédé selon l'une des revendications 1 à 5, **caractérisé en ce que** la grandeur caractéristique de l'endommagement du filtre (GCE) est calculée (411-413) à partir du chargement en suies et d'une température mesurée ou estimée à l'intérieur du filtre à particules.

7. Procédé selon l'une des revendications 1 à 6, **caractérisé en ce qu'**il comporte l'étape de réguler (61) la nouvelle valeur courante d'endommagement par rapport à un endommagement cible.

8. Procédé selon la revendication 7, **caractérisé en ce que** l'endommagement cible est variable en fonction d'un kilométrage du véhicule.

9. Procédé selon l'une des revendications 1 à 8, **caractérisé en ce qu'**il comporte en outre l'étape de tenir compte (71) d'un encrassement du filtre à particules pour déterminer la nouvelle valeur courante d'endommagement.

10. Procédé selon l'une des revendications 1 à 9, **caractérisé en ce qu'**il comporte en outre l'étape de fournir (81) une indication au conducteur relative au taux de filtration du filtre à particules à partir de la nouvelle valeur courante d'endommagement du filtre à particules.

11. Système de commande d'un filtre à particules comportant une mémoire contenant des instructions pour la mise en oeuvre du procédé selon l'une des revendications précédentes.

## Patentansprüche

1. Verfahren zum Steuern eines Filters von Partikeln, die in den Abgasen eines Kraftfahrzeugs enthalten sind, in Abhängigkeit von einer Beschädigung, **dadurch gekennzeichnet, dass** es bei einer Regenerierung des Partikelfilters folgende Schritte umfasst:

- Einstufen (11) einer charakteristischen Größe der Beschädigung des Filters, wie zum Beispiel einer Ladung oder einer Masse von Ruß des Filters in eine Beschädigungsklasse (KCm),
- Bestimmen mittels einer Beschädigungsmatrix (211) eines Einzelbeschädigungswerts (End_unit) ausgehend von der Beschädigungsklasse (KCm) und einer Anzahl von Wiederholungen der Regenerierungen, die mit der Beschädigungsklasse (KCm) assoziiert ist,
- Summieren dieses Einzelbeschädigungswerts (End_unit) mit einem aktuellen Beschädigungswert (End_tot), um einen neuen aktuellen Beschädigungswert (End_tot) zu erhalten, und
- Senken eines Rußmasse-Grenzwerts, für den die Regenerierung des Partikelfilters in Abhängigkeit von dem neuen aktuellen Beschädigungswert (End_tot) befohlen wird.

2. Verfahren nach Anspruch 1, **dadurch gekennzeichnet, dass** es außerdem den Schritt des Begrenzens (222) des neuen Beschädigungswerts (End_tot) mittels einer kalibrierbaren Funktion umfasst.

3. Verfahren nach Anspruch 1 oder 2, **dadurch gekennzeichnet, dass** es den Schritt des Begrenzens (511-513) des Einzelbeschädigungswerts umfasst.

**4.** Verfahren nach einem der Ansprüche 1 bis 3, **dadurch gekennzeichnet, dass** es den Schritt des Erfassens (311, 312) einer Regenerierung des Partikelfilters durch Vergleichen eines gemessenen oder geschätzten Temperaturwerts stromaufwärts des Filters (TamontFAP) mit einem Schwellentemperaturwert (Seuil_Thermique) umfasst.

**5.** Verfahren nach einem der Ansprüche 1 bis 4, **dadurch gekennzeichnet, dass** es den Schritt des Verlängerns (313) einer Erfassung von Verbrennung von Ruß nach einem Stoppen einer Regenerierungsanfrage des Partikelfilters umfasst.

**6.** Verfahren nach einem der Ansprüche 1 bis 5, **dadurch gekennzeichnet, dass** der charakteristische Wert der Beschädigung des Filters (GCE) ausgehend von der Rußladung und einer Temperatur, die im Inneren des Partikelfilters gemessen oder geschätzt wird, berechnet wird (411-413).

**7.** Verfahren nach einem der Ansprüche 1 bis 6, **dadurch gekennzeichnet, dass** es den Schritt des Regulierens (61) des neuen aktuellen Beschädigungswerts in Bezug auf eine Zielbeschädigung umfasst.

**8.** Verfahren nach Anspruch 7, **dadurch gekennzeichnet, dass** die Zielbeschädigung in Abhängigkeit von einem Kilometerstand des Fahrzeugs variabel ist.

**9.** Verfahren nach einem der Ansprüche 1 bis 8, **dadurch gekennzeichnet, dass** es außerdem den Schritt der Berücksichtigung (71) einer Verschmutzung des Partikelfilters umfasst, um den neuen aktuellen Beschädigungswert zu bestimmen.

**10.** Verfahren nach einem der Ansprüche 1 bis 9, **dadurch gekennzeichnet, dass** es außerdem den Schritt des Lieferns (81) einer Angabe an den Fahrer in Zusammenhang mit der Filterungsrate des Partikelfilters ausgehend von dem neuen aktuellen Beschädigungswert des Partikelfilters umfasst.

**11.** System zum Steuern eines Partikelfilters, das einen Speicher umfasst, der Anweisungen zur Umsetzung des Verfahrens nach einem der vorhergehenden Ansprüche enthält.

**Claims**

**1.** A method for controlling a particle filter that filters particles contained in the exhaust gases of a motor vehicle as a function of a damage, **characterized in that** during a regeneration of said particle filter, it comprises the follows steps:

- classifying (11) a parameter of the damage of the filter, such as a load or mass of soot of the filter, in a damage class (KCm),
- determining, by means of a damage matrix (211), a single damage value (End_unit) from the damage class (KCm) and a number of repetitions of the regenerations associated with said damage class (KCm),
- combining said single damage value (End_unit) with a current damage value (End_tot) to obtain a new current damage value (End_tot), and
- lowering a limit soot mass value for which the regeneration of the particle filter will be controlled as a function of the new current damage value (End_tot).

**2.** The method according to Claim 1, **characterized in that** it further comprises the step of limiting (222) the new damage value (End_tot) by means of a calibratable function.

**3.** The method according to Claim 1 or 2, **characterized in that** it comprises the step of limiting (511-513) the single damage value.

**4.** The method according to one of Claims 1 to 3, **characterized in that** it comprises the step of detecting (311, 312) a regeneration of the particle filter by comparison of a measured or estimated temperature value upstream of the filter (TamontFAP) with a threshold temperature value (Seuil_Thermique).

**5.** The method according to one of Claims 1 to 4, **characterized in that** it comprises the step of extending (313) a soot combustion detection after a stop of a regeneration request of the particle filter.

**6.** The method according to one of Claims 1 to 5, **characterized in that** the characteristic magnitude of the damage of the filter (GCE) is calculated (411-413) from the soot load and from a measured or estimated temperature in the interior of the particle filter.

7. The method according to one of Claims 1 to 6, **characterized in that** it comprises the step of regulating (61) the new current damage value with respect to a target damage.

8. The method according to Claim 7, **characterized in that** the target damage is variable as a function of a mileage of the vehicle.

9. The method according to one of Claims 1 to 8, **characterized in that** it further comprises the step of taking into account (71) a clogging of the particle filter to determine the new current damage value.

10. The method according to one of Claims 1 to 9, **characterized in that** it further comprises the step of providing (81) an indication to the driver relating to the rate of filtration of the particle filter from the new current damage value of the particle filter.

11. A system for controlling a particle filter comprising a memory containing instructions for the implementation of the method according to one of the preceding claims.

**Fig. 1**

EP 2 888 459 B1

**Fig. 2**

**Fig. 3**

Fig. 4

Fig. 5

Fig. 6

Tamont FAP

Détection de
combustion des suies

31

Demande de RG

Info_Nouveau_FAP

Tintra FAP

Vchargement

Info_Nouveau_FAP

Tintra FAP

Vchargement

Classe KCm
de RGn

Répétitions classe
KCm de HEn

1

2

Info_Nouveau_FAP

Classe KCm de RGn

Répétitions classe
KCm de HEn

Kilométrage

Coefficient de
protection Kn

Kilométrage

## Fig. 7

Tamont FAP

311

31

313

Seuil_Thermique

>

312

OR

In

Out

Demande de RG

T_apres_RG

Tdly

Tdly

Détection de RG

## Fig. 8

EP 2 888 459 B1

Tintra FAP

Masse intra FAP

**41**

| Tintra FAP |
|---|
| Masse intra FAP |

Calcul CCE de RGn

**111**

Attribution classe KC

Classe KCm de RGn

Classe KCm de RGn

**1**

Classe KCm de RGn

**121**

E

u2

u1

1

+ +

Nbr répétitions classe KCm de HEn

**122**

u1

u2

E

new u1

Classe KCm

Incrément HE

**132**

Init HE

[0,0,0,0,0,0,0,0,0,0,0]

Info_Nouveau_FAP

Sauvegarde de HE pour RGn

**131**

# Fig. 9

Fig. 10

Fig. 11

EP 2 888 459 B1

21

u

Y

max(u,y)

Nouveau_FAP

511

Sauvegarde

512

>=

513

X

End_unit

Classe KCm de RGn

Nbr répétitions classe
KCm de HEn

211

**Fig. 12**

Endommagement cible

62

3

2.5

2

1.5

1

0.5

0

0        0.5        1        1.5        2        2.5        3

Kilométrage (km)

cible
limite ISC
Limite OBD

**Fig. 13**

EP 2 888 459 B1

613

Ecart

Zone morte optionnelle

612 — Gains_Contrôleur

614 — Correction_max

613 — Correction_min

Contrôleur

611

61

Coefficient de protection Kn

**Fig. 14**

62

61

Kilométrage

+

Régulateur

Coefficient de protection Kn

2

21

71

Encrassement

X

81

Taux de filtration

72

Nouveau FAP

Nouveau_FAP

Classe KCm de RGn

Nombre de répétitions
Classe KCm de HEn

Classe KCm de RGn

Nombre de répétitions
Classe KCm de HEn

End_unit

+
+

End_estim

221

0

Info_Nouveau_FAP

232

Sauvegarde
End_estim

231

**Fig. 15**

18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1103702 A2
- US 20020196153 A1